# EUROPEAN PATENT APPLICATION

(11) **EP 4 567 051 A1**
(43) Date of publication of application: **11.06.2025**
(21) Application number: 23307126.5
(22) Date of filing: 04.12.2023
(51) Int. Cl.: C08F 4/70, C08F 222/32, C09J 4/00

(54) **PHOTOCURABLE COMPOSITION COMPRISING N-HEPTYLCYANOACRYLATE, N-HEXYLCYANOACRYLATE OR N-OCTYLCYANOACRYLATE**

(71) Applicant: Bostik SA, 92800 Puteaux (FR)
(72) Inventor: GARRA, Patxi, 08193 Bellaterra, Barcelona (ES); FAGGI, Enrico, 08193 Bellaterra, Barcelona (ES); PÉREZ DORADO, Eva, 08193 Bellaterra, Barcelona (ES)
(74) Representative: Arkema Patent

(57) **Abstract**

The present invention relates to a photocurable composition comprising:
- a cyanoacrylate A selected from the group consisting of: n-hexylcyanoacrylate, n-heptylcyanoacrylate, n-octylcyanoacrylate, and mixtures thereof;
- a radical photoinitiator;
- a metallocene compound;
- a compound B selected from boron trifluoride, boron trifluoride etherate, boron trifluoride dihydrate, boron trifluoride ethanol, boron trifluoride methanol, boron trifluoride acetic acid, boron trifluoride butyl ether, boron trifluoride butanol, boron trifluoride propanol, boron trifluoride dimethyl sulfide, boron trifluoride acetonitrile, boron trifluoride tetrahydrofuran, boron trifluoride isopropyl alcohol;
- optionally a radical polymerization inhibitor, provided that when the photocurable composition comprises a radical polymerization inhibitor, its weight content is 0.04% by weight or less;

wherein the molar content of compound B is greater than or equal to 0.141 mmol per 1 kg of the composition; and
wherein the molar ratio metallocene compound / compound B ranges from 2 to 8.

## Description

### FIELD

The present invention relates to a photocurable composition comprising n-heptylcyanoacrylate, n-hexylcyanoacrylate or n-octylcyanoacrylate.

The present invention also relates to the use of the composition in an electric device, consumer repair, maintenance repair and overhaul (MRO) industry, electronic device, optical device, medical device, luxury item, and in automotive.

### BACKGROUND

In the field of instant adhesives (for example curing in few seconds), two families are well known.

The first one concerns adhesive compositions based on cyanoacrylate (CA) esters which are called 'superglues'. They are popular in many areas of application and are used by consumers, professional craft workers and industrial assemblers. They are typically solvent free, 100% reactive materials, safe noted for their ability to form strong adhesive bonds on many different substrates rapidly. Ethyl cyanoacrylates and Methoxyethyl cyanoacrylate are the most popular grades. However, one drawback is the fact that the adhesive is too fast while handling, particularly on fingers/skin or inside automatic industrial dispensing devices (adhesive blocking said devices). This user experience is negative and skin sensation can last for at least 48 hours.

The other domain is UV adhesive which are activated by light. Those adhesives are typically acrylates mixed with photoinitiators. The photoinitiator receives light and generates radicals that activate the polymerization of the double bond. Typically, UV adhesive are used as follows: dispensed with a dispensing device on a substrate with no or low irradiance, followed by a photoactivation step with actinic radiation having a higher irradiance for photocuring. While this is highly robust on transparent substrates, the main drawback is that it does not cure where light intensity is not high enough for example with low irradiance or in shadowed area or for opaque substrates after dispensing. Also some skin irritation is notoriously reported for acrylates adhesives.

New UV adhesives have thus emerged in the UV adhesives family namely with UV silicon-acrylates, UV isocyanate-acrylates or UV cyanoacrylates. However, the photocuring times (after dispensing and photoactivation) are generally very slow and the function for humidity cure is different from the UV curing functions for silicon-based acrylates and isocyanate-based acrylates. The toxicity and irritation/sensitization profile of these acrylates are also incompatible with skin spillage. The need for UV irradiation (typically 365 nm) and not visible light is a topic of concern as present in OSHA standards (Nonionizing Radiation (29 CFR 1910.97) and Ionizing Radiation (29 CFR 1910.1096)). Irradiation wavelengths below 400 nm are generally considered as not safe for the professional workers. In addition, irradiances of more than 100 mW/cm2, even in the visible range, can cause potential photothermal burnings of substrates or professional operators.

In parallel, the current products on the market for UV cyanoacrylates ECA-based or MECA-based still present very fast curing during dispensing (with no or low actinic irradiance) before photoactivation step, and, still without light, finger sticking in less than 10 seconds with strong peel forces attached, which is unwanted and unpleasant for the end users. Clogging inside automatic dispensing device is also a severe limitation to the widespread use of these compositions in the industry.

There also exists some issues of shelf stability for existing products.

There is a need to overcome at least partially at least one of the above-mentioned drawbacks.

More particularly, there is a need for an on demand photocurable composition exhibiting slow humidity/surface curing capabilities when dispensing in order to avoid having finger sticking sensations, or clogging inside dispensing devices.

There is also a need for a photocurable composition which is shelf stable.

### DESCRIPTION OF THE INVENTION

The present invention relates to a photocurable composition comprising:
- a cyanoacrylate A selected from the group consisting of: n-hexylcyanoacrylate, n-heptylcyanoacrylate, n-octylcyanoacrylate, and mixtures thereof;
- a radical photoinitiator;
- a metallocene compound;
- a compound B selected from boron trifluoride, boron trifluoride etherate, boron trifluoride dihydrate, boron trifluoride ethanol, boron trifluoride methanol, boron trifluoride acetic acid, boron trifluoride butyl ether, boron trifluoride butanol, boron trifluoride propanol, boron trifluoride dimethyl sulfide, boron trifluoride acetonitrile, boron trifluoride tetrahydrofuran, boron trifluoride isopropyl alcohol;
- optionally a radical polymerization inhibitor, provided that when the photocurable composition comprises a radical polymerization inhibitor, its content is 0.04% by weight or less;

wherein the molar content of compound B is greater than or equal to 0.141 mmol per 1 kg of the composition; and
wherein the molar ratio metallocene compound / compound B ranges from 2 to 8.

### Cyanoacrylate A

The cyanoacrylate A is selected from the group consisting of: n-hexylcyanoacrylate, n-heptylcyanoacrylate, n-octylcyanoacrylate, and mixtures thereof.

N-heptylcyanoacrylate, n-hexylcyanoacrylate or n-octylcyanoacrylate may be at least partially biobased, i.e. derived at least partially from renewable resources.

Preferably, the n-heptylcyanoacrylate has a biocarbon content equal to or higher than 30%, more preferably equal to or higher than 45%.

The terms "biocarbon" or "biobased carbon" indicates that the carbon is of renewable origin, or of natural origin and originates from a biomaterial, as indicated below. The biocarbon content and the biomaterial content are expressions denoting the same value.

A material of renewable origin, also called biomaterial, is an organic material in which the carbon derives from CO₂ recently fixed (on a human scale) by photosynthesis from the atmosphere. On earth, this CO₂ is captured or fixed by plants. At sea, CO₂ is captured or fixed by bacteria or plankton carrying out photosynthesis. A biomaterial (100% carbon of natural origin) has a ¹⁴C/¹²C isotope ratio greater than 10⁻¹², typically of approximately 1.2 × 10⁻¹², while a fossil material has a zero ratio. Indeed, the isotope ¹⁴C is formed in the atmosphere and is then integrated by photosynthesis, according to a time scale of a few decades at most. The half-life of ¹⁴C is 5730 years. Thus, materials resulting from photosynthesis, namely plants in general, necessarily have a maximum ¹⁴C isotope content.

The biomaterial content or biocarbon content is determined by using the standards ASTM D 6866 (ASTM D 6866-21, method B).

Synthesis of n-heptylcyanoacrylate, n-hexylcyanoacrylate and n-octylcyanoacrylate may be performed according to methods known by the man skilled in the art. Knovenagel synthesis and crackless synthesis are typically used by the man skilled in the art. Batch or continuous distillations may be used, in presence of radical and acid stabilizers.

N-heptylcyanoacrylate is also commercially available from Bostik.

N-hexylcyanoacrylate and n-octylcyanoacrylate are also commercially available from Crackless Monomer Company (CMC).

The photocurable composition preferably comprises more than or equal to 70 % by weight of cyanoacrylate A (and preferably of n-heptylcyanoacrylate) based on the total weight of the composition.

More preferably, the photocurable composition comprises more than or equal to 85% by weight of the cyanoacrylate A (and preferably of n-heptylcyanoacrylate) based on the total weight of the composition.

Preferably, the cyanoacrylate A is n-heptylcyanoacrylate.

### Optional radical polymerization inhibitor

The photocurable composition may comprise radical polymerization inhibitor, provided that when the photocurable composition comprise radical polymerization inhibitor, its content is 0.04% by weight or less based on the total weight of the composition.

Thus, it means that either the composition does not comprise radical polymerization inhibitor (0% by weight) or when the composition comprises radical polymerization inhibitor, its total content is less than or equal to 0.04% by weight based on the total weight of the composition (excluding 0% by weight).

Radical polymerization inhibitors typically help preventing premature polymerization due to any radical mechanism such as auto-oxidation or thermal oxidation.

Radical polymerization inhibitors are preferably selected from the group consisting of hindered phenolic or polyphenolic compounds, and mixtures thereof.

Radical polymerization inhibitors are preferably selected from the group consisting of: hydroquinone, hydroquinone monomethyl ether, mono-tertiary-butyl hydroquinone, 2,5-ditertiary-butyl-hydroquinone, p-methoxyphenol, hydroxyanisole, butylated hydroxyanisole, hydroxyanisol butyl ether, 2,6-di-tert-butyl-p-cresol, 2,2'-methylene-bis-(6-tert-butyl-4-methylphenol), p-tert-butyl catechol, 1,3,5-trimethyl-2,4,6-tris(3,5-di-tert-butyl-4-hydroxybenzyl) benzene, hydroxytoluene butyl ether, and mixtures thereof; more preferably from hydroquinone monomethyl ether, 2,2'-methylene-bis-(6-tert-butyl-4-methylphenol), and mixtures thereof.

Preferably, the photocurable composition comprises a radical polymerization inhibitor.

Preferably, the photocurable composition comprises from 0.005% to 0.03% by weight of radical polymerization inhibitor based on the total weight of the composition.

### Metallocene compound

The metallocene compound may be selected from the group consisting of ferrocene compounds, ruthenocene compounds, bis(cyclopentadieneyl) osmium compounds, their derivatives thereof, and mixtures thereof.

Preferably, the metallocene compound is selected from ferrocene compounds, its derivatives, and mixtures thereof.

The metallocene compound is preferably the ferrocene compound of formula (I): 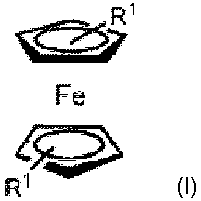 wherein R¹ is a hydrogen or a C1-C4 alkyl group, and wherein one or more R¹ are present in one or both rings. Suitable ferrocene compounds are for example disclosed in US 5824180 and US6503959.

Preferably, in the ferrocene compound of formula (I), R¹ is hydrogen.

The photocurable composition preferably comprises from 50 ppm to 500 ppm by weight based on the total weight of the composition.

### Radical photoinitiator

The photocurable composition comprises a radical photoinitiator.

A radical photoinitiator is typically a compound that initiates the polymerization process in a composition comprising monomers that are susceptible to direct radical polymerization when exposed to radiation (UV or light). As UV or visible light energy is absorbed by the radical photoinitiator, it fragments into reactive species (free radicals).

The radical photoinitiator is preferably selected from the group consisting of acyl phosphine oxides, alpha diketones, thioxanthones, alpha-hydroxy ketones, benzyldimethylketals, phenylglyoxylates, camphorquinone, acylgermane compounds, dialkylsilylglyoxylates, and mixtures thereof.

The acyl phosphine oxides typically include benzoyl phosphine oxides.

The benzoyl phosphine oxides are preferably selected from the group consisting of: phenyl bis(2,4,6-trimethylbenzoyl)phosphine oxide (BAPO), diphenyl (2,4,6-trimethylbenzoyl)phosphine oxide (TPO), Ethyl phenyl(2,4,6-trimethylbenzoyl)phosphinate (TPO-L), benzoyl-diphenylphosphine oxide (BDPO), 2,4,6-trimethylbenzoyl-methoxyphenylphosphine oxide (TMMPO), phthaloyl-bis(diphenylphosphine oxide) (PBDPO), 2,6-difluoro benzoyl-diphenylphosphine oxide (DFDPO), and mixtures thereof, more preferably selected from phenyl bis(2,4,6-trimethylbenzoyl)phosphine oxide (BAPO), diphenyl (2,4,6-trimethylbenzoyl)phosphine oxide (TPO), and mixtures thereof.

The acylgermane compound is preferably of the following of formula (II) or (III): 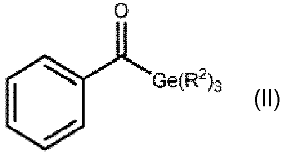 wherein R² is a methyl or a phenyl group; 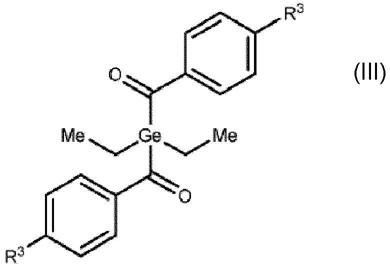 wherein R³ is hydrogen or a methoxy group.

Suitable radical photoinitiators are commercially available under the denominations Irgacure^{®} 819 (BASF) or Darocur^{®} TPO (BASF) for phenyl-substituted acyl phosphines; Irgacure^{®} 184/500/2959 (BASF) or Darocur^{®} 1173 (BASF) for alpha-hydroxy ketones; Irgacure^{®} 651 (BASF) for benzyldimethylketals, Irgacure^{®} 754 (BASF) or Darocur^{®} MBF (BASF) for phenylglyoxylates; from Sigma-Aldrich Merck for camphorquinone; under the denomination Ivocerin^{™} from Ivoclar KGaA& AC Co. for acyl germane compounds; and from Sigma-Aldrich Merck for dialkylsilylglyoxylates.

The photocurable composition preferably comprises from 50 to 6000 ppm, more preferably from 200 to 5000 ppm based on the total weight of the composition.

Preferably, the radical photoinitiator is selected from acyl germane compounds, and more preferably it has formula (III) as defined above wherein R³ is hydrogen or methoxy.

### Compound B

The compound B is selected from boron trifluoride or boron trifluoride etherate or boron trifluoride dihydrate, boron trifluoride ethanol, boron trifluoride methanol, boron trifluoride acetic acid, boron trifluoride butyl ether, boron trifluoride butanol, boron trifluoride propanol, boron trifluoride dimethyl sulfide, boron trifluoride acetonitrile, boron trifluoride tetrahydrofuran, boron trifluoride isopropyl alcohol; and its molar content is greater than or equal to 0,141 mmol per 1 kg of composition.

Preferably, the molar content of compound B in the composition ranges from 0,141 mmol per 1 kg of composition to 0,564 mmol per 1 kg of composition.

The compound B is preferably boron trifluoride etherate.

In the composition, the molar ratio metallocene compound / compound B ranges from 2 to 8.

Preferably, the molar ratio metallocene compound / compound B ranges from 2.3 to 7.6.

### Optional thickener

Preferably, the photocurable composition comprises at least one thickener.

More preferably, the thickener is selected from the group consisting of poly(meth)acrylates, polyvinylpyrrolidones, polyvinyl acetates, partially hydrolysed polyvinyl acetates, vinyl acetate copolymers, acylated cellulose polymers, ethylene-acrylic copolymers, and mixtures thereof.

The vinyl acetate copolymers may be copolymers of polyvinyl chloride and polyvinyl acetate, copolymers of polyethylene and polyvinyl acetate.

The copolymers typically include terpolymers. For example, copolymers ethylene-acrylic comprises terpolymers of ethylene-methylacrylate-carboxylic acid-based monomers.

Copolymers of polyethylene and polyvinyl acetate are typically commercially available under the tradename LEVAMELT by Lanxess. Examples are LEVAMELT^{®}400, LEVAMELT^{®} 600 and LEVAMELT^{®} 900. The LEVAMELT products typically differs in the amount of vinyl acetate present. For example, LEVAMELT^{®} 400 comprises an ethylene-vinyl acetate copolymer comprising 40 wt% vinyl acetate.

Examples of copolymers of polyvinyl chloride and polyvinyl acetate are VINNOL products commercialized by Wacker, such as for example Vinnol^{®} H40-60. It covers both copolymers and terpolymers.

Examples of copolymers of ethylene, acrylate (butyl or methyl) and carboxylic acid-based monomers are Vamac^{®} G or Vamac^{®} Ultra LT from DuPont.

The total content of thickener (including mixtures of thickener) in the composition may range from 2 wt.% to 18 wt.%, preferably from 3 wt.% to 12 wt.%, and more preferably from 4 wt.% to 10 wt.% based on the total weight of the composition.

The thickener is advantageously selected so as to be soluble in cyanoacrylate A as defined herein.

Preferably, the thickener is selected from the group consisting of vinyl acetate copolymers.

More preferably, the thickener is selected from the group consisting of copolymers of polyvinyl chloride and polyvinyl acetate.

### Additional photopolymerizable monomers

The composition may comprise additional photopolymerizable monomers (different from cyanoacrylate A), preferably selected from (meth)acrylate, methylene malonate, or cyanoacrylate (different from cyanoacrylate A), and mixtures thereof.

US2018/215973 describes suitable (meth)acrylate monomers.

The (meth)acrylate monomers may be selected from the group consisting of monofunctional (meth)acrylate monomers, polyfunctional acrylate monomers, and mixtures thereof. The monofunctional (meth)acrylate monomers may be selected from linear or branched alkyl, alkoxylakyl, furfuryl, isobornyl, glycidyl, or phenoxyethyl, esters and the cyclic and heterocyclic esters. Suitable monofunctional acrylate monomers are commercially available under the denominations SR-531, SR-789 from Sartomer. The polyfunctional (meth)acrylate monomers may be selected from the group consisting of butanediol di(meth)acrylate, hexanediol di(meth)acrylate, diethylene glycol di(meth)acrylate, triethyleneglycol di(meth)acrylate, polyethylene glycol di(meth)acrylate, trimethylolpropane tri(meth)acrylate (TMPTA), ethoxylatedtrimethylolpropane tri(meth)acrylate, neopentylglycoldiacrylate, pentaerythritoltetraacrylate (PETA), pentaerythritoltetramethacrylate (PETMA), dipentaerythritolpenta(meth)acrylate, dipentaerythritolhexa(meth)acrylate, bisphenol-A-diacrylate, bisphenol-A-dimethacrylate, ethoxylatedbisphenol-A-diacrylate, tricyclodecane dimethanol diacrylate (commercially available as Sartomer SR833S), propoxylatedbisphenol-A-diacrylate, and mixtures thereof. Polyfunctional (meth)acrylic esters may be of relatively low molecular weight such as the commercially available, triethylene oxide dimethacrylate, or butanedioldimethacrylate, or may be of higher molecular weight: (meth)acrylic functionalized oligomers and (meth)acrylic functionalized resins, for example (meth)acrylic ester terminated polymers, such as (meth)acrylic terminated polyesters or urethane polymers or copolymers or so-called (meth)acrylic ester functionalised telechelic, dendrimeric or hyperbranched materials. Suitable (meth)acrylic monomers are commercially available from Sartomer, Arkema and BASF, such as for example SR-341, SR-833S, SR-508 and SR-834 from Sartomer.

The photocurable composition may comprise from 0% to 30% by weight of additional photopolymerizable monomers, by total weight of the mixtures of photopolymerizable monomers.

Preferably, the composition comprises from 0% to 25% by weight of further cyanoacrylate (other than cyanoacrylate A as defined herein). More preferably, the composition comprises from 0% to 20% by weight of further cyanoacrylate (other than cyanoacrylate A as defined herein).

Preferably, the photocurable composition is substantially free of photopolymerizable monomers other than cyanoacrylate A. By "substantially free of" is meant that the photocurable composition comprises 1 % by weight or less, preferably 0.1 % by weight or less, more preferably 0.01 % by weight or less, most preferably 0 % by weight (free), of additional photopolymerizable monomers by total weight of the photocurable composition.

### Optional additional ingredient

The photocurable composition may comprise at least one additional ingredient preferably selected from the group consisting of: an acid stabilizing agent, a metal adhesion promoter, a glass adhesion promoter, a thixotropic agent, a toughener, a dye, a fluorophore, a filler, a plasticizer, and mixtures thereof.

The acid stabilizing agents are typically inhibitors of the anionic polymerization. The acid stabilizing agent may be selected from the group consisting of Bronsted acids, Lewis acids, and mixtures thereof. The acid stabilizing agent is preferably selected from the group consisting of methanesulfonic acid, p-toluenesulfonic acid, hydrofluoric acid, sulphur dioxide, and mixtures thereof.

Typically, a metal adhesion promoter may be chosen from the group consisting of aromatic carboxylic acid or anhydride, and preferably from the group consisting of trimellitic acid, trimellitic anhydride, cis-1,2,3,6-tetrahydrophthalic anhydride, pyromellitic acid, pyromellitic anhydride, dianhydride of 3,3',4,4'-benzophenonetetracarboxylic acid, itaconic acid, itaconic anhydride, 3-buten-1,2,3-tricarboxylic acid, and mixtures thereof.

The total content of metal adhesion promoter(s) in the photocurable composition may range from 0.005 wt.% to 0.1 wt.%, preferably from 0.01 wt.% to 0.05 wt.% based on the total weight of the composition.

Glass adhesion promoters can be found, for example, in EP 0 918 832 B1. Glass adhesion promoter may be Glycidoxypropyltrimethoxy silane or Vinyltriacetoxy silane.

The total content of glass adhesion promoter(s) in the photocurable composition may range from 0.05 wt.% to 0.5 wt.%, preferably from 0.1 wt.% to 0.3 wt.% based on the total weight of the composition.

A suitable thixotropic agent may be selected from the group consisting of hydrogenated castor oil optionally modified by reaction with an amine, polyamides, silica, and mixtures thereof.

Preferably, the thixotropic agent is silica, more preferably fumed silica, even more preferably hydrophobic fumed silica. Hydrophobic fumed silica may also acts as a filler. A hydrophobic fumed silica is commercially available under the commercial denomination Aerosil^{®} R202 from Evonik.

If present, the photocurable composition may comprise from 2% to 10% by weight, preferably from 3% to 9% by weight, more preferably from 7% to 9% by weight, of thixotropic agents by total weight of the composition.

Suitable tougheners or toughening agents may be block copolymers such as, for example, polymethylmethacrylate-co-polybutylacrylate-co-polymethylmethacrylate, for example commercially available as Kurarity LA2140; elastomeric rubbers; elastomeric polymers; liquid elastomers; polyesters; acrylic rubbers; butadiene/acrylonitrile rubber; Buna rubber; liquid rubbers (such as for example the ones marketed by Kuraray, LIR-50, LIR-403;LIR410); polyisobutylene; polyisoprene; natural rubber; synthetic rubber such as for example styrene/butadiene rubber (SBR); polyurethane polymers; fluorinated rubbers; isoprene-acrylonitrile polymers; chlorosulfonated polyethylenes; block copolymers; core-shell rubber particles (such as clearstrength^{®} XT150), and mixtures thereof.

Typically, the content of toughening agent in the photocurable composition ranges from 1 wt.% to 15 wt.%, preferably from 3 wt.% to 8 wt.%, and more preferably from 4 wt.% to 7 wt.% based on the total weight of the composition.

The plasticizer may be any plasticizer comprising at least one ester group. The plasticizer may be selected from the group consisting of: phthalates, azelates, adipates, alkyl sebacates, and mixtures thereof.

The plasticizer may be selected from trimethyl trimellitate, diethylene glycol dibenzoate, diethyl malonate, triethyl-O-acetyl citrate, benzylbutylphtalate, dipropylene glycol dibenzoate, diethyl adipate, tributyl-O-acetyl citrate, dimethyl sebacate, and mixtures thereof.

Preferably, the composition does not comprise glass particles.

Preferably, the total content of additional ingredient(s) in the photocurable composition is lower than 5 % by weight, even more preferably lower than 2 % by weight based on the total weight of the composition.

Preferably, the photocurable composition comprises from 0 to 500 ppm of accelerating agent selected from the group consisting of calixarenes, crown ethers (for example, 15 Crown 5, 18 Crown 6, Dibenzo 18 Crown 6, commercialized by Alfa Aesar), cyclodextrins, and mixtures thereof. More preferably, it comprises from 0 to 500 ppm of accelerating agent based on the total weight of the composition.

More preferably, the photocurable composition comprises from 0 to 30 ppm of accelerating agent selected from the group consisting of calixarenes, crown ethers (for example, 15 Crown 5, 18 Crown 6, Dibenzo 18 Crown 6, commercialized by Alfa Aesar), cyclodextrins, and mixtures thereof. More preferably it comprises from 0 to 30 ppm of accelerating agent.

Even more preferably, the photocurable composition does not comprise accelerating agent.

### Photocurable composition

Preferably, the photocurable composition has a viscosity ranging from 100 to 7000 mPa.s at 25°C.

More preferably, the photocurable composition has a viscosity ranging from 100 to 1000 mPa.s at 25°C.

Even more preferably, the photocurable composition has a viscosity ranging from 100 to 200 mPa.s at 25°C.

The viscosity may be measured according to the ASTM D3236 standard and in a Brookfield viscometer, in particular with a Brookfield DVNext Spindle 52z at 100 rpm.

Preferably, the photocurable composition has a biocarbon content equal to or higher than 30%, even more preferably higher to or equal to 40%. The biocarbon content is measured as defined above.

Preferably, the photocurable composition is one-part composition.

The photocurable composition according to the invention has preferably a glass transition temperature ranging from 40°C to 120°C, more preferably from 50°C to 115°C, even more preferably from 80°C to 112°C.

The glass transition temperature may be measured by dynamic mechanical thermal analysis according to ISO 6721 : 2012.

The photocurable composition according to the invention exhibits preferably a storage modulus at 25°C ranging from 10 to 300 MPa, more preferably from 50 to 150 MPa at 25°C.

The storage modulus may be measured by dynamic mechanical thermal analysis according to ISO 6721.11:2012.

The photocurable composition is preferably an adhesive composition.

In a preferred embodiment, the photocurable composition comprises:
- more than or equal to 70% by weight of a cyanoacrylate A selected from the group consisting of: n-hexylcyanoacrylate, n-heptylcyanoacrylate, n-octylcyanoacrylate, and mixtures thereof;
- a radical photoinitiator;
- a metallocene compound;
- a compound B selected from boron trifluoride, boron trifluoride etherate, boron trifluoride dihydrate, boron trifluoride ethanol, boron trifluoride methanol, boron trifluoride acetic acid, boron trifluoride butyl ether, boron trifluoride butanol, boron trifluoride propanol, boron trifluoride dimethyl sulfide, boron trifluoride acetonitrile, boron trifluoride tetrahydrofuran, boron trifluoride isopropyl alcohol;
- from 0.005% to 0.03% by weight of radical polymerization inhibitor;
- from 2% to 18% by weight of a thickener selected from the group consisting of: poly(meth)acrylates, polyvinylpyrrolidones, polyvinyl acetates, partially hydrolysed polyvinyl acetates, vinyl acetate copolymers, acylated cellulose polymers, ethylene-acrylic copolymers, and mixtures thereof;

wherein the molar content of compound B is greater than or equal to 0.141 mmol per 1 kg of the composition; and
wherein the molar ratio metallocene compound / compound B ranges from 2.3 to 7.6;
wherein the composition comprises from 0 to 500 ppm of accelerating agent; and
wherein the photocurable composition has a viscosity ranging from 100 to 1000 mPa.s at 25°C.

The photocurable composition of the invention may be prepared by mixing of the ingredients at 25°C.

The photocurable composition of the invention advantageously exhibits at least one of the following properties:
- Slow dark cure during dispensing step, for example with fixture times of more than 100 seconds on Mild steel, ABS and Beech wood (dark in the term dark cure is defined as irradiances of less than 3 mW/cm2 at 405 nm ), which advantageously allows avoiding finger sticking sensations for the users or dark curing and clogging inside dispensing devices used. So even in case of drops of the composition on the fingers when dispensing, the users can advantageously wiped his hands before photocure ;
- Low blooming ;
- On demand, fast photocure of less than 10 seconds during photoactivation step, at an irradiance ranging in particular from 3 to100 mW/cm2 (at 405 nm),
- Allow cure of the adhesive at lower irradiance for example less than 100 mW/cm2 at 405 nm, which is safer for the users and/or avoid burning of substrates;
- Shelf life stability of at least 12 months at 23°C;
- Good resistance to high temperature (for example 85°C) and high relative humidity (for example 85% RH).

### Uses

The present invention also concerns the use of the photocurable composition as defined above for bonding substrates or for coating an article.

The present invention also concerns a method for bonding substrates comprising the steps of:
- Dispensing and applying the composition as defined herein to at least one of the substrates,
- contacting together the substrates;
- curing of the composition.

The curing is preferably carried out under actinic radiation.

The actinic radiation preferably includes near infrared radiation, visible light, UV radiation, electron irradiation (Electron Beam Curing) or X-ray radiation. More preferably, the actinic radiation is a UV radiation.

The actinic radiation source may be any curing lamps known by the skilled person. Preferably, the curing lamp is selected from light-emitting diode, mercury lamp, quartz tungsten halogen light, and Electron-beam lamp. Preferably, the flow activation device comprises one or several light-emitting diodes UV.

Preferably, the actinic radiation is carried out with a light-emitting diode UV.

The UV radiation has preferably a wavelength ranging from 100 to 800nm, more preferably from 395 to 600 nm, and even more preferably at 405 nm.

The UV radiation has preferably an irradiance ranging from 3 to 100 mW/cm2.

The present invention also relates to the use of the composition as defined above in an electric device, consumer repair, maintenance repair and overhaul (MRO) industry, electronic device, optical device, medical device, luxury item, and in automotive.

The electronic device may be selected from the group consisting of light emitting devices, computer devices, In vehicle Infotainment (IVI), mobile phones, a GPS unit, tablets, touch screens, headset...

Preferably, the electronic device is mobile phone or a headset (including True Wireless Stereo, TWS).

The electric device may be selected from the group consisting of control device (for example for motor vehicle), electrical battery (preferably automotive electrical battery).

The optical device may be an image display device or an illumination device. Examples of image display device include for example liquid crystal display, an organic EL diode-Luminescent display. Examples of illumination device include organic EL illumination.

Preferably, the composition as defined herein is used for bonding substrates which are selected from the group consisting of Acrylonitrile butadiene styrene (ABS, polycarbonate (PC), Polybutylene terephthalate (PBT), Polyamides (PA), inked glass, glass, stainless steel, mild steel, aluminium, polymethylmethacrylate (PMMA), wood, polyethylene terephthalate (PET), nitrile butadiene rubber (NBR), leather, polyvinylchloride (PVC), fabric, copper, nickel, neodymium, phenolic resin, polystyrene, polyethylene, polypropylene.

The present invention also relates to the use of the composition as defined above for improving the lifetime of a joint preferably in an electronic, electric, optical or medical device.

Preferably, the above-mentioned use is for reducing (more preferably avoiding) blooming preferably in an electronic, electric, optical or medical device.

The present invention also relates to a method for improving the lifetime of a joint of electronic, electric, optical or medical component, said method comprising using the composition as defined above.

Preferably, the method is further for reducing (more preferably avoiding) blooming in said electronic, electric, optical or medical device.

Preferably, the joint is an adhesive joint.

Preferably, the composition as defined herein is used for bonding substrates which are selected from the group consisting of Acrylonitrile butadiene styrene (ABS, polycarbonate (PC), Polybutylene terephthalate (PBT), Polyamides (PA), inked glass, glass, stainless steel, mild steel, aluminium, polymethylmethacrylate (PMMA), wood, polyethylene terephthalate (PET), nitrile butadiene rubber (NBR), leather, polyvinylchloride (PVC), fabric, copper, nickel, neodymium, phenolic resin, polystyrene, polyethylene, polypropylene.

The present invention also concerns an electronic, electric, optical or medical device comprising at least one joint formed from the composition as defined above.

Preferably, the joint is formed between substrates which are selected from the group consisting of Acrylonitrile butadiene styrene (ABS, polycarbonate (PC), Polybutylene terephthalate (PBT), Polyamides (PA), inked glass, glass, stainless steel, mild steel, aluminium, polymethylmethacrylate (PMMA), wood, polyethylene terephthalate (PET), nitrile butadiene rubber (NBR), leather, polyvinylchloride (PVC), fabric, copper, nickel, neodymium, phenolic resin, polystyrene, polyethylene, polypropylene.

The above-mentioned paragraphs can be combined one with each other. For examples, the preferred embodiments for the compositions can be combined all together, and combined with the preferred embodiments of the uses.

The ranges disclosed in this description include both the lower and the upper limit thereof. For example, the expressions "ranging from x to y" or "between x and y" comprises the limits x and y.

### Examples

The following ingredients were used to prepare the compositions:
n-heptylcyanoacrylate commercialized by Bostik
Methoxyethyl Cyanaocrylate : MECA commercialized by CMC as CMC1024
PMMA (polymethylmethacrylate): Degacryl^{®} 449 commercialized by Evonik
Vinnol H40/60: thickener copolymer of polyvinylchloride and polyvinyl acetate commercialized by Wacker
Loctite superglue 3 (ethyl cyanonacrylate based >80% by weight) was purchased from Amazon.es
Ivocerin was obtained from Ivoclar

The following products were obtained from Sigma Aldrich Merck: Boron Trifluoride Diethyl Etherate complex, Methanesulfonic Acid, Ferrocene, phenyl bis(2,4,6-trimethylbenzoyl)phosphine oxide (BAPO), diphenyl (2,4,6-trimethylbenzoyl)phosphine oxide (TPO), BHA (Butylated Hydroxyanisole).

Mild steel (MS), Beech wood (BW), acrylonitrile butadiene styrene (ABS) lapshears (for fixture time assessment) were purchased from Rocholl

Porcine skin (thickness of 2-2.5mm) from the belly part was purchased from local butcher shop and prepared according to Materials 2019, 12, 2473; doi:10.3390/ma12152473. Porcine skin was covered with PBS (Phosphate Buffered Saline) solution-soaked tissue, and stored at - 20°C for later testing. Porcine skin was left 2 hours to unfreeze before testing.

### Example 1: preparation of the compositions

The compositions were prepared by mixing all ingredients at 25°C, except the thickeners, that were added in small portions, at 60-70 °C, over 1-2 hours, and under stirring. The following table discloses the content (% by weight) and nature of ingredients of the compositions.

The following comparative composition C1 was prepared as follows according to the nature and content of the ingredients disclosed in table 1: the n-Heptyl Cyanoacrylate monomer was directly mixed with the accelerator (if present) and acid stabilizer BF₃·Et₂O in a high-density polyethylene container, the mixture was heated to approximately 60 °C, then the thickening agent was added, in small portions, under mechanical stirring until complete dissolution (approximately 2 hours) as was reported in WO2016038514. The mixture was allowed to cool down to approximately 40 °C and the remaining components (photoinitiating system) were added, avoiding exposure to light.

Comparative composition C2 is Loctite superglue 3.

| | **Comparative Composition C1** | **Composition 3 (invention)** | **Composition 4 (invention)** | **Composition 5 (invention)** |
|---|---|---|---|---|
| **n-heptyl Cyanoacrylate (%)** | - | Qs 100% | Qs 100% | Qs 100% |
| **2-Methoxyehtyl Cyanoacrylate (%)** | Qs 100% | - | - | - |
| **BF3·Et2O (mmol per kg)** | 0.442 | 0.221 | 0.221 | 0.221 |
| **MSA (ppm)** | - | 5 | 5 | 5 |
| **PMMA (%)** | - | - | - | - |
| **Vinnol (%)** | - | 8 | 8 | 8 |
| **Ivocerin (ppm)** | 1000 | 1000 | - | - |
| **TPO (ppm)** | - | - | 2000 | - |
| **BAPO (ppm)** | - | - | - | 3000 |
| **Ferrocene (ppm)** | 200 | 200 | 200 | 200 |
| **BHA (ppm)** | - | 250 | 250 | 250 |

*ppm by weight*

### Properties

Fixture time (FT) is the time at which an adhesive bond (250 mm²) is capable of supporting a 3 kg load for 10 seconds at 23 ± 2 °C under 50 % Relative Humidity (RH). Fixture times are always recorded without actinic light irradiation. Values were confirmed in duplicate.

Fixture time on pig skin (FT) is the time at which an adhesive bond (200 mm²) is capable of supporting a 3 kg load for 10 seconds at 23 ± 2 °C under 60 % Relative Humidity (RH). Fixture times are always recorded without actinic light irradiation. Values were confirmed in duplicate. Fixture time (FT) on fingers is the time at which an adhesive bond (130mm²) is capable of binding the index and the thumb sustained firmly at 23 ± 2 °C under 50 % Relative Humidity (RH). Tests were performed at 5 seconds first, then 10 seconds if no cure was observed at 5 seconds. The bond was either very stuck if the index and thumb are not possible to be removed without solvent, stuck when the separation was not possible without extra force and ok after 10sec if both thumbs and index were easily removed. Fixture times are always recorded without actinic light irradiation.

After one bonding experiment, the fingers and thumb were not used for bonding again during a minimum period of 72 hours to let skin cleaning and recovering. Values were confirmed in duplicate.

Photocuring time is the time for a drop of adhesive dispensed on top of PMMA lapshear (from Rocholl) to be tack free (dry to touch) under LED irradiation at 405 nm with 20 mW/cm2 irradiance.

| | **Comparative composition C1** | **Comparative composition C2** | **Composition 3 (invention)** | **Composition 4** | **Composition 5 (invention)** |
|---|---|---|---|---|---|
| | | **Superglue-3** | | **(invention)** | |
| **Photocuring time (s)** | 2 | no | 3 | 3 | 4 |
| **FT ABS(s)** | 50-60 | 40 | >120 | >120 | >120 |
| **FT BW (s)** | 60 | 35 | >120 | >120 | >120 |
| **FT MS (s)** | 20 | 20 | > 120 | > 120 | > 120 |
| **FT (fingers) (s)** | 5 | 5 | easily separated at 10s | easily separated at 10s | easily separated at 10s |
| | (stuck) | ( very stuck) | | | |
| **FT(pig skin) (s)** | 15 | 5 | 30 | 30 | 30 |

Compositions 3, 4 and 5 are compositions according to the invention, using different type of photoinitiator : composition 3 (Ivocerin), composition 4 (TPO), composition 5 (BAPO). The fixture time is advantageously higher than 120 s on various substrates (ABS, BW, MS) which demonstrates slow dark cure during dispensing step (no photoactivation step). The fixture times on pig skin are also higher for compositions 3, 4 and 5 according to the invention compared to comparative compositions C1 with MECA monomer (15 s) and C2 with ECA monomer (5s). Thus, the humidty/surface cure is advantageously slower with compositions 3, 4 and 5. It would be known to the man skilled in the art that these compositions are advantageously dispensed without clogging in dispensing devices due to slow curing time during dispensing.

Finally, at 10 s after application on fingers according to the method disclosed above, the fingers can be easily separated with compositions 3, 4 and 5, while the fingers are stuck even very stuck with comparative compositions C1 and C2. Thus, the compositions of the invention can be used by end users without risk of undesirable/unpleasant sticking of fingers, or clogging of dispensing devices.

However, after photoactivation step as defined above, the compositions of the invention advantageously exhibits fast curing in less than 5 seconds.

The compositions are thus a new kind of on demand instant photocurable adhesives with slower dark curing for dispensing, bringing more latitude for operators, consumers and dispensing devices.

## Claims

1. Photocurable composition comprising:
- a cyanoacrylate A selected from the group consisting of: n-hexylcyanoacrylate, n-heptylcyanoacrylate, n-octylcyanoacrylate, and mixtures thereof;
- a radical photoinitiator;
- a metallocene compound;
- a compound B selected from boron trifluoride, boron trifluoride etherate, boron trifluoride dihydrate, boron trifluoride ethanol, boron trifluoride methanol, boron trifluoride acetic acid, boron trifluoride butyl ether, boron trifluoride butanol, boron trifluoride propanol, boron trifluoride dimethyl sulfide, boron trifluoride acetonitrile, boron trifluoride tetrahydrofuran, boron trifluoride isopropyl alcohol;
- optionally a radical polymerization inhibitor, provided that when the photocurable composition comprises a radical polymerization inhibitor, its content is 0.04% by weight or less;
wherein the molar content of compound B is greater than or equal to 0.141 mmol per 1 kg of the composition; and
wherein the molar ratio metallocene compound / compound B ranges from 2 to 8.

2. Photocurable composition according to claim 1, **characterized in that** it comprises more than or equal to 70 % by weight of cyanoacrylate A based on the total weight of the composition.

3. Photocurable composition according to anyone of claims 1 or 2, **characterized in that** it comprises more than or equal to 85% by weight of the cyanoacrylate A based on the total weight of the composition.

4. Photocurable composition according to anyone of claims 1 to 3, wherein the cyanoacrylate A is n-heptylcyanoacrylate.

5. Photocurable composition according to anyone of claims 1 to 4, wherein the radical polymerization inhibitor is selected from the group consisting of: hydroquinone, hydroquinone monomethyl ether, mono-tertiary-butyl hydroquinone, 2,5-ditertiary-butyl-hydroquinone, p-methoxyphenol, hydroxyanisole, butylated hydroxyanisole, hydroxyanisol butyl ether, 2,6-di-tert-butyl-p-cresol, 2,2'-methylene-bis-(6-tert-butyl-4-methylphenol), p-tert-butyl catechol, 1,3,5-trimethyl-2,4,6-tris(3,5-di-tert-butyl-4-hydroxybenzyl) benzene, hydroxytoluene butyl ether, and mixtures thereof; more preferably from hydroquinone monomethyl ether, 2,2'-methylene-bis-(6-tert-butyl-4-methylphenol), and mixtures thereof.

6. Photocurable composition according to anyone of claims 1 to 5, wherein it comprises from 0.005% to 0.03% by weight of radical polymerization inhibitor.

7. Photocurable composition according to anyone of claims 1 to 6, wherein the metallocene compound is selected from the group consisting of ferrocene compounds, ruthenocene compounds, bis(cyclopentadieneyl) osmium compounds, their derivatives thereof, and mixtures thereof.

8. Photocurable composition according to anyone of claims 1 to 7, wherein the radical photoinitiator is selected from the group consisting of acyl phosphine oxides, alpha diketones, thioxanthones, alpha-hydroxy ketones, benzyldimethylketals, phenylglyoxylates, camphorquinone, acylgermane compounds, dialkylsilylglyoxylates, and mixtures thereof, more preferably from acyl germane compounds.

9. Photocurable composition according to anyone of claims 1 to 8, wherein the molar content of compound B in the composition ranges from 0,141 mmol per 1 kg of composition to0,564 mmol per 1 kg of composition.

10. Photocurable composition according to anyone of claims 1 to 9, wherein the compound B is boron trifluoride etherate.

11. Photocurable composition according to anyone of claims 1 to 10, wherein the molar ratio metallocene compound / compound B ranges from 2.3 to 7.6.

12. Photocurable composition according to anyone of claims 1 to 11, **characterized in that** it comprises at least one thickener, preferably selected from the group consisting of poly(meth)acrylates, polyvinylpyrrolidones, polyvinyl acetates, partially hydrolysed polyvinyl acetates, vinyl acetate copolymers, acylated cellulose polymers, ethylene-acrylic copolymers, and mixtures thereof.

13. Photocurable composition according to anyone of claims 1 to 12, **characterized in that** it is substantially free of photopolymerizable monomers other than cyanoacrylate A.

14. Photocurable composition according to anyone of claims 1 to 13, **characterized in that** it comprises at least one additional ingredient selected from the group consisting of: an acid stabilizing agent, a metal adhesion promoter, a glass adhesion promoter, a thixotropic agent, a toughener, a dye, a fluorophore, a filler, a plasticizer, and mixtures thereof.

15. Photocurable composition according to anyone of claims 1 to 14, **characterized in that** it comprises 0 to 500 ppm of accelerating agent, preferably 0 to 30 ppm of accelerating agent.

16. Photocurable composition according to anyone of claims 1 to 15, **characterized in that** it does not comprise accelerating agent.

17. Photocurable composition according to anyone of claims 1 to 16, **characterized in that** it has a viscosity ranging from 100 to 7000 mPa.s at 25°C, more preferably from 100 to 200 mPa.s at 25°C.

18. Use of the photocurable composition according to anyone of claims 1 to 17, for bonding substrates or for coating an article.

19. Method for bonding substrates comprising the steps of:
∘ applying the composition according to anyone of claims 1 to 17 to at least one of the substrates,
∘ contacting together the substrates;
∘ curing of the composition.
